# EUROPÄISCHE PATENTSCHRIFT

(11) **EP 3 436 295 B1**
(45) Veröffentlichungstag und Bekanntmachung des Hinweises auf die Patenterteilung: **06.05.2020**
(21) Anmeldenummer: 17703322.2
(22) Anmeldetag: 06.02.2017
(51) Int. Cl.: B60G 17/056

(54) **DRUCKLUFTVERSORGUNGSANLAGE**
COMPRESSED AIR SUPPLY SYSTEM
COMPRESSEUR POUR LA GÉNÉRATION D'AIR COMPRIMÉ

(30) Priorität: 30.03.2016 DE 102016003662
(43) Veröffentlichungstag der Anmeldung: 06.02.2019
(73) Patentinhaber: WABCO Europe BVBA, 1170 Brussels (BE)
(72) Erfinder: MEIER, Jörg, 31840 Hessisch Oldendorf (DE); STABENOW, Uwe, 30880 Laatzen (DE); STÜNKEL, Christoph, 31515 Wunstorf (DE)
(74) Vertreter: Rabe, Dirk-Heinrich
(86) Internationale Anmeldenummer: PCT/EP2017/000156
(87) Internationale Veröffentlichungsnummer: WO 2017/167427

(56) Entgegenhaltungen:
- WO-A1-01/76898
- DE-A1-102009 003 472
- DE-A1-102012 006 382
- DE-A1-102014 012 646
- DE-B4- 10 223 405

## Beschreibung

Die Erfindung betrifft eine Druckluftversorgungsanlage zum Betreiben einer Pneumatikanlage, insbesondere einer Luftfederanlage eines Fahrzeugs. Die Erfindung betrifft weiter ein pneumatisches System mit der Druckluftversorgungsanlage, ein Verfahren zum Betreiben einer Druckluftversorgungsanlage und/oder einer Pneumatikanlage, insbesondere einer Luftfederanlage eines Fahrzeugs, und eine Einrichtung zum Steuern und/oder Regeln einer Druckluftversorgungsanlage und/oder einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Dokument DE 102 23 405 B4 beschreibt ein Luftfedersystem für ein Kraftfahrzeug mit einem Kompressor, einem dem Kompressor nachgelagerten Trockner, Niveauregelventilen, über die einzelne, den Fahrzeugrädern zugeordnete Luftfedern ansteuerbar sind, einer Druckleitung, die den Kompressor mit den Luftfedern verbindet, einer Entlüftungsleitung, einem Abschnitt der Druckleitung zwischen Trockner und Niveauregelventilen, in dem eine Drossel parallel zu einem Rückschlagventil angeordnet ist und einem Schaltventil, das parallel zu dem Druckleitungsabschnitt angeordnet ist, so dass die Drossel einen variierbaren Strömungsquerschnitt aufweist. Über diesen variablen Strömungsquerschnitt, der als Drossel arbeitet, und ein elektromagnetisches Schaltventil, kann die Abströmgeschwindigkeit der im Falle eines Absenkens des Fahrzeugniveaus über die Niveauregelventile abgelassenen Luftmasse eingestellt werden.

Aufgabe der Erfindung ist es, eine verbesserte Lösung für eine Druckluftversorgungsanlage bereitzustellen, die einen verbesserten Belüftungs- und Entlüftungsvorgang gewährleistet. Insbesondere soll dies für eine Fahrzeugabsenkung gewährleistet sein. Gleichwohl soll eine vorteilhafte Regeneration eines Lufttrockners erreicht werden.

Diese Aufgabe wird erfindungsgemäß mit der Druckluftversorgungsanlage des Anspruchs 1 gelöst. Erfindungsgemäß wird in einem ersten Aspekt der Erfindung, eine Druckluftversorgungsanlage zum Betreiben einer Pneumatikanlage vorgeschlagen, insbesondere einer Luftfederanlage eines Fahrzeugs, wobei die Druckluftversorgungsanlage aufweist:
- eine Druckluftzuführung,
- einen Druckluftanschluss zur Pneumatikanlage,
- mindestens einen Entlüftungsanschluss zur Umgebung,
- eine Pneumatikhauptleitung zwischen der Druckluftzuführung und dem Druckluftanschluss, die einen Lufttrockner und eine Regenerationsdrossel, aufweist,
- eine Entlüftungsleitung zwischen der Pneumatikhauptleitung und einem Entlüftungsanschluss, die ein erstes Entlüftungsventil und eine Entlüftungsdrossel aufweist,
- eine Bypass-Leitung zwischen dem Druckluftanschluss und dem Lufttrockner, die ein zusätzliches Bypass-Ventil aufweist, welches als ein 2/2-Wege-Ventil ausgebildet ist, und das einen über den Lufttrockner geführten Luftstrom zum Befüllen und Entlüften der Pneumatikanlage unter Umgehung der Regenerationsdrossel ermöglicht.

Ein Vorteil des ersten Aspekts der Erfindung liegt somit darin, dass ein zusätzliches Ventil und eine entsprechende zusätzliche Leitung in die Druckluftversorgungsanlage eingebaut sind, um eine schnelle Entlüftung und Befüllung der Pneumatikanlage zu gewährleisten.

Die Befüllung und/oder Entlüftung kann beliebig lange erfolgen. So kann in der erfindungsgemäßen Druckluftversorgungsanlage sowohl ein Entlüftungs- oder Befüllungsquerschnitt eingestellt werden, also eine Wahl getroffen werden, ob die Bypass-Leitung genutzt werden soll, als auch eine Dauer für diesen Entlüftungs- oder Befüllungsprozess vorgegeben werden.

Solch eine individuelle Einstellung der Druckluftversorgungsanlage kann beispielsweise interessant sein, falls man die Druckluft innerhalb eines Fahrzeugs unverzüglich regulieren will. Dies kann für ein sofortiges Absenken eines Fahrzeugs zum einfachen Einstieg oder für ein asymmetrisches Absenken eines Fahrzeugs zu Show-Zwecken relevant sein.

Weiterhin vorteilhaft an der erfindungsgemäßen Druckluftversorgungsanlage ist, dass für die Entlüftung abgeleitete Luft immer über den Lufttrockner geleitet ist. Dadurch kann eine bessere Trocknerregenration erreicht werden, als sie im Fall einer direkt in die Umgebung abgeleiteten Luftströmung aus der Pneumatikanlage möglich ist. Ein System zur Lufttrocknung ist insbesondere für eine Pneumatikanlage erforderlich, die einen hohen Druckluftverbrauch hat, so dass von außen regelmäßig feuchte Luft in die Pneumatikanlage gelangt, die zu Korrosionsschäden und entsprechenden Funktionsstörungen führen können.
Dies wird erfindungsgemäß über den Lufttrockner und die Regenerationsdrossel realisiert. Von außen wird teilweise feuchte Luft aus der Umgebung für ein Befüllen der Pneumatikanlage verwendet. Diese wird durch die Renerationsdrossel verdichtet und durch den Lufttrockner zum Druckluftanschluss geleitet. Dabei wird die Feuchtigkeit vom Lufttrockner im hohen Druckzustand aufgenommen. In einem anschließenden Regenerationszyklus wird ein Teil dieser angesaugten, getrockneten Luft aus der Pneumatikanlage nun durch die Regenerationsdrossel entspannt, wieder durch den Lufttrockner geleitet, und in die Umgebung abgelassen. Dabei nimmt die trockene Luft bei dem durch die Regenerationsdrossel abgesenkten Druck die im Lufttrockner während der Trocknung gebundene Feuchtigkeit nun durch Desorption wieder auf und transportiert sie aus dem System heraus.

Die erfindungsgemäße Druckluftversorgungsanlage hat auch den Vorteil, dass das Bypass-Ventil in einem nahezu druckausgeglichenen Zustand betrieben werden kann. Dadurch kann eine Schließfeder des Bypass-Ventils und ein typischerweise zum Schalten dieses Ventils genutzter Schaltmagnet klein ausgeführt sein. Außerdem sorgt ein nahezu druckausgeglichener Zustand für eine weitgehend gleichmäßige Beanspruchung von Komponenten der Druckluftversorgungsanlage.

Weiterhin ist vorteilhaft, dass bekannte Druckluftversorgungsanlagen aus dem Stand der Technik einfach zu einer erfindungsgemäßen Druckluftversorgungsanlage umgebaut werden können. Dies erfordert lediglich ein Anbringen der Bypass-Leitung sowie des Bypass-Ventils parallel zu der Regenerationsdrossel.

Das zusätzliche Bypass-Ventil kann sowohl zum Zwecke der Entlüftung, als auch der Befüllung genutzt werden. Dies wird besonders einfach durch das genutzte 2/2-Wege-Ventil realisiert, da es somit einen blockierenden Zustand des Ventils gibt und einen entsperrten Zustand, der einen Druckluftaustauch in beide Richtungen von dem Ventil zulässt.

Als Betriebsmodus wird im Rahmen der Erfindung unter anderem eine Stellung der Ventile der Druckluftversorgungsanlage oder eine vordefinierte Abfolge von Stellungen der Ventile bezeichnet. Eine weitere wichtige Stellgröße der Druckversorgungsanlage für die Definition eines Betriebsmodus, kann eine verstellbare Drosselbreite der Entlüftungsdrossel sein.

Gemäß einem zweiten Aspekt, betrifft die Erfindung ein pneumatisches System mit der Druckluftversorgungsanlage nach dem ersten Aspekt der Erfindung. Das erfindungsgemäße pneumatische System weist weiterhin eine Pneumatikanlage auf, die in Form einer Luftfederanlage gebildet ist, die eine Galerie und wenigstens eine an der Galerie pneumatisch angeschlossene erste Zweigleitung mit einem Balg und/oder eine an der Galerie pneumatisch angeschlossene zweite Zweigleitung mit einem Druckluftreservoir, sowie einem dem Balg vorgeordneten ersten Wege-Ventil und/oder dem Druckluftreservoir vorgeordneten zweiten Wege-Ventil aufweist.

Ein dritter Aspekt der Erfindung betrifft ein Verfahren zum Betreiben einer Pneumatikanlage, insbesondere einer Luftfederanlage eines Fahrzeugs, mittels einer Druckluftversorgungsanlage nach dem ersten Aspekt der Erfindung. Das erfindungsgemäße Verfahren weist die folgenden Schritte auf:
- Befüllen der Pneumatikanlage mittels einer über eine Pneumatikhauptleitung und über einen Lufttrockner geführte Druckluftströmung aus der Druckluftversorgungsanlage über ein in der Pneumatikhauptleitung angeordnetes Hauptleitungsventil, insbesondere ein Rückschlagventil, und/oder über ein Bypass-Ventil;
- Halten des Drucks in der Pneumatikanlage, wobei die Pneumatikhauptleitung gegen eine Druckluftströmung aus der Pneumatikanlage mit dem Entlüftungsventil und dem Bypass-Ventil gesperrt wird, und
- Entlüften der Pneumatikanlage mittels der über die Pneumatikhauptleitung und über den Lufttrockner geführten Druckluftströmung aus der Pneumatikanlage über ein, mit einer Entlüftungsdrossel verbundenes, Entlüftungsventil oder über das Entlüftungsventil und ein Bypass-Ventil.

Das Verfahren gemäß dem dritten Aspekt der Erfindung hat die gleichen Vorteile wie die Druckluftversorgungsanlage gemäß dem ersten Aspekt der Erfindung, da die Druckluftversorgungseinheit nach dem ersten Aspekt zu dem Verfahren gemäß dem dritten Aspekt führt.

Gemäß eines nicht beanspruchten Aspekts, betrifft eine Variante eine Einrichtung zum Steuern und/oder Regeln einer Druckluftversorgungsanlage und/oder einer Pneumatikanlage entsprechend einem Verfahren gemäß dem dritten Aspekt der Erfindung.

Die Einrichtung zum Steuern und/oder Regeln einer Druckluftversorgungsanlage und/oder einer Pneumatikanlage gemäß dem nicht beanspruchten Aspekt hat die gleiche Vorteile wie die Druckluftversorgungsanlage gemäß dem ersten Aspekt der Erfindung, da die Druckluftversorgungseinheit zu dem Programm gemäß dem vierten Aspekt führt.

Dabei kann die Einrichtung zum Steuern und/oder Regeln in einem Computer ausgeführt werden, der sich in dem Fahrzeug befindet, in dem das entsprechende Verfahren zum Betreiben einer Pneumatikanlage realisiert wird. Alternativ kann sich der Computer in einem externen Gerät befinden, dass beispielsweise über eine Funkverbindung eine Druckluftversorgungsanlage ansteuert, die das Verfahren zum Betreiben einer Pneumatikanlage ausführt. Hierbei ist das Programm derart ausgebildet, dass der das Programm ausführende Computer eine Stellung der jeweiligen Ventile der Druckluftversorgungseinheit und/oder der Pneumatikanlage steuert.

Nachfolgend werden bevorzugte Weiterbildungen der erfindungsgemäßen Druckluftversorgungsanlage gemäß dem ersten Aspekt der Erfindung beschrieben.

In einer Weiterbildung der Druckluftversorgungsanlage ist die Bypass-Leitung über einen ersten und einen zweiten Anschlusspunkt an die Pneumatikhauptleitung angeschlossen, wobei der erste Anschlusspunkt zwischen dem Lufttrockner und der Regenerationsdrossel und der zweite Anschlusspunkt zwischen der Regenerationsdrossel und dem Druckluftanschluss angeordnet sind. Somit wird in dieser Weiterbildung die Regenerationsdrossel umgangen, während Luftströme zum Befüllen oder Entlüften über den Trockner geleitet werden. Durch eine kompakte Struktur dieser Weiterbildung, die sich aus einer Parallelführung der Bypass-Leitung ergibt, wird ein nach dem Beginn eines Befüllungs oder Entlüftungsvorgangs besonders schnell ein druckausgeglichener Zustand in der Druckluftversorgungsanlage erreicht.

In einer weiteren Weiterbildung, ist das Entlüftungsventil ein Rückschlagventil und/oder das zusätzliche Bypass-Ventil ist als ein weiteres Rückschlagventil ausgebildet. Dadurch kann in dieser Weiterbildung in vorteilhafter Weise ein für die Funktionsfähigkeit der Druckversorgungsanlage zu hoher Druck innerhalb der Pneumatikhauptleitung während einem Befüllungsprozess vermieden werden. Hierbei ist in einer besonders vorteilhaften Variante dieser Weiterbildung eine Federkraft einer das Rückschlagventil schließenden Feder so gewählt, dass das Rückschlagventil sich ohne eine entsprechende Ansteuerung öffnet, wenn ein Staudruck vor der Regenerationsdrossel in der Nähe eines für die Funktionsfähigkeit der Druckluftversorgungsanlage kritischen Druckwertes liegt. Hierdurch kann ebenfalls eine schnellere Befüllung der Pneumatikanlage durch die Druckluftversorgungsanlage sichergestellt werden. In einer anderen Variante wird durch die Verwendung eines Rückschlagventils ein Entlüftungsknall vermieden, der ansonsten bei hohen Drücken zu Beginn eines schlagartig gestarteten Entlüftungsprozesses auftritt. Grundsätzlich kann das Rückschlagventil je nach Bedarf auf zweckmäßige Weise entsperrt sein. Vorzugsweise ist an das entsperrbare Rückschlagventil eine Entsperrleitung angeschlossen. Dies kann grundsätzlich je nach Bedarf eine zweckmäßig ausgebildete Steuerleitung sein, beispielsweise eine elektrische, magnetische oder pneumatische Steuerleitung, die geeignet ist, das Rückschlagventil derart anzusteuern, dass dieses entsperrt wird.

Weiterhin erlaubt die Druckluftversorgungsanlage in einer weiteren Weiterbildung für die Bypass-Leitung einen größeren minimalen Strömungsquerschnitt eines durchströmenden Druckluftstroms als für die Regenerationsdrossel. Insbesondere hat das Bypass-Ventil eine größere Nennweite als die Regenerationsdrossel, was eine besonders schnelle Befüllung und Entlüftung der Pneumatikanlage für einen jeweiligen Betriebsmodus mit geöffnetem Bypass-Ventil erlaubt. Der minimale Strömungsquerschnitt entspricht dem Strömungsquerschnitt an derjenigen Komponente einer jeweiligen Entlüftungsleitung mit der kleinsten Nennweite. In dieser bevorzugten Weiterbildung kann die Bypass-Leitung für eine schnellere Entlüftung genutzt werden, als die Pneumatikhauptleitung mit der Regenerationsdrossel. In einer Variante dieser Weiterbildung ist der minimale Strömungsquerschnitt der Bypass-Leitung mindestens 1,5 mal so groß, bevorzugt mindestens doppelt so groß, bevorzugt mindestens dreimal so groß wie der minimale Strömungsquerschnitt der Regenerationsdrossel. In einer Variante dieser Weiterbildung sind die minimalen Strömungsquerschnitte der Regenerationsdrossel und der Bypass-Leitung steuerbar. So kann zusätzlich zum Ansteuern, welche Leitung verwendet werden soll, auch ein Strömungsquerschnitt bestimmt werden, wodurch effektiv eine Entlüftungs- und Befüllungsgeschwindigkeit der Pneumatikanlage feinstufig reguliert werden kann. Dies wird beispielsweise in einer Variante über eine steuerbare Regenerationsdrossel in der Pneumatikhauptleitung und eine steuerbare Bypass-Drossel in der Bypass-Leitung realisiert. Die steuerbare Regenerationsdrossel und die Regenerationsdrossel können dabei, genauso wie das Bypass-Ventil und die steuerbare Bypass-Drossel identisch sein.

In einer Weiterbildung erlaubt die Entlüftungsleitung einen größeren minimalen Strömungsquerschnitt eines durchströmenden Druckluftstroms als die Bypass-Leitung. Dies kann in vorteilhafter weise eine mögliche Stauung eines Luftstroms bei einer Entlüftung des Pneumatiksystems reduzieren. In einer vorteilhaften Variante dieser Weiterbildung, ist der größte minimale Strömungsquerschnitt der Entlüftungsleitung flächenmäßig genauso groß wie die Summe der minimalen Strömungsquerschnitte von der Regenerationsdrossel und Bypass-Leitung. In dieser Variante kann folglich der Befüllungs und Entlüftungs-Luftstrom so geführt werden, dass bei geöffnetem Bypass-Ventil und geöffnetem Rückschlagventil in der Pneumatikhauptleitung keine Stauung des Luftstroms durch die Entlüftungsleitung entsteht.

Erfindungsgemäß weist die Druckluftversorgungsanlage weiterhin ein Druckluftreservoir auf, insbesondere zusätzlich oder alternativ als Teil einer Pneumatikanlage, das über ein Befüllventil an der Pneumatikhauptleitung angeschlossen ist und das ausgebildet ist, bei Vorliegen eines Boostmodus der Druckluftversorgungsanlage, über das Befüllventil und die Pneumatikhauptleitung die Pneumatikanlage mit Druckluft zu befüllen. Dies ist angesichts der vorliegenden Erfindung besonders vorteilhaft, da durch das Vorliegen eines Entlüftens über die Regenerationsdrossel in Kombination mit der Bypass-Leitung ein besonders schnelles Entlüften möglich ist, so dass ein schnelles erneutes Befüllen der Pneumatikanlage wünschenswert sein kann. Ein schnelles Befüllen nach einem Entlüftungsvorgang kann notwendig sein, um im Falle eines Entlüftens unter ein gewünschtes Luftdruckniveau innerhalb der Pneumatikanlage schnell das gewünschte Luftdruckniveau bereitzustellen. Außerdem kann ein schnelles Befüllen nach einem Entlüftungsvorgang notwendig sein, um eine Fahrtauglichkeit des die Pneumatikanlage aufweisenden Fahrzeugs wiederherzustellen, beispielsweise nach einem Absenken des Fahrzeugs oder einer Fahrzeugseite um einen bequemen Einstieg in das Fahrzeug zu ermöglichen. Besonders vorteilhaft ist diese Weiterbildung auch dadurch, dass auch das Befüllen über die Bypass-Leitung und die Pneumatikhauptleitung schnell erfolgen kann, so dass ein gewünschtes Luftdruckniveau innerhalb der Pneumatikanlage besonders schnell durch die Druckluft aus dem Druckluftreservoir erfolgen kann.

In einer Weiterbildung weist die erfindungsgemäße Druckluftversorgungsanlage einen zweistufigen Kompressor auf, der sowohl mit der Luftzuführung, als auch mit der Pneumatikhauptleitung verbunden ist und der ausgebildet ist, in einem entsprechenden Betriebsmodus der Druckluftversorgungsanlage die Pneumatikanlage mit Druckluft zu befüllen. Ein in dieser Weiterbildung ermöglichtes schnelles Befüllen der Pneumatikanlage ermöglicht ein schnelles Korrigieren des Luftdruckniveaus in der Pneumatikanlage nach dem durch die Erfindung realisierbaren besonders schnellen Entlüftungsprozess. In einer Variante dieser Weiterbildung ist der zweistufige Kompressor eine Alternative oder eine Ergänzung des Luftdruckreservoirs zum Befüllen der Pneumatikanlage aus der Weiterbildung aus dem letzten Abschnitt.

In einer vorteilhaften Weiterbildung der Druckversorgungsanlage weist die Pneumatikhauptleitung weiterhin ein Rückschlagventil auf. Hierdurch kann in einer vorteilhaften Variante besonders einfach Druckluft in der Pneumatikanlage gehalten werden.

Erfindungsgemäß ist die Druckluftversorgungsanlage ausgebildet, einen ersten Befüll-Betriebsmodus bereitzustellen, in dem das Bypass-Ventil und das Befüllventil zumindest zeitweise gleichzeitig geöffnet sind, so dass die Pneumatikanlage über einen vorbestimmten Zeitraum eines Befüllvorgangs, bevorzugt über einen gesamten Zeitraum des Befüllvorgangs, durch einen Luftstrom aus dem Druckluftreservoir befüllt werden kann, der teilweise nicht durch die Regenerationsdrossel sondern durch einen minimalen Strömungsquerschnitt der Bypass-Leitung begrenzt ist. In einer Variante dieser Weiterbildung, hat die Bypass-Leitung einen mindestens 1,5-mal so großen minimalen Strömungsquerschnitt eines durchströmenden Druckluftstroms wie die Regenerationsdrossel. In einer weiteren Variante ist die Druckluftversorgungseinheit zusätzlich ausgebildet, einen zweiten Befüll-Betriebsmodus bereitzustellen, in dem das Bypass-Ventil über einen gesamten Befüllvorgang geschlossen ist. Dadurch kann in dieser Variante der erfindungsgemäßen Druckluftversorgungseinheit auf die aus dem Stand der Technik bekannte Art und Weise eine Befüllung der Pneumatikanlage durchgeführt werden.

In einer weiteren Weiterbildung, ist die Druckluftversorgungsanlage ausgebildet, einen ersten Entlüftungs-Betriebsmodus bereitzustellen, in dem nur das Entlüftungsventil und nicht das Bypass-Ventil geöffnet ist, so dass die Pneumatikanlage ausschließlich über den gesamten Zeitraum eines Entlüftungsvorgangs über die Regenerationsdrossel entlüftet werden kann. Folglich kann in dieser Weiterbildung in dem zweiten Betriebsmodus eine aus dem Stand der Technik bekannte Entlüftung der Pneumatikanlage durchgeführt werden.

In einer besonders bevorzugten Weiterbildung ist die Druckluftversorgungsanlage ausgebildet, einen zweiten Entlüftungs-Betriebsmodus bereitzustellen, in dem das Entlüftungsventil und das Bypass-Ventil gleichzeitig geöffnet sind, so dass die Pneumatikanlage über den gesamten Zeitraum eines Entlüftungsvorgangs über die Entlüftungsleitung durch einen Luftstrom entlüftet werden kann, der teilweise nicht durch die Regenerationsdrossel sondern durch einen minimalen Strömungsquerschnitt der Bypass-Leitung begrenzt ist.

In einer besonders bevorzugten Weiterbildung kann für die Durchführung eines Entlüftungsprozesses in der Druckluftversorgungsanlage zwischen dem ersten und dem zweiten Entlüftungs-Betriebsmodus gewählt werden. Eine Wahl des Betriebsmodus erfolgt bevorzugt automatisiert, abhängig von einer jeweiligen Aktion eines Nutzers der Druckluftversorgungsanlage. Beispielsweise kann das Öffnen einer Tür zu einer Aktivierung des ersten oder zweiten Entlüftungs-Betriebsmodus führen, damit das Fahrzeug schnell für einen komfortablen Einstieg abgesenkt werden kann. Die Auswahl des jeweiligen Betriebsmodus, erfolgt in einer weiteren Variante dieser Weiterbildung über ein externes Gerät, mit dem eine Nutzeingabe, die einen Betriebsmodus impliziert, empfangen und weitergegeben werden kann.

In einer weiteren Weiterbildung ist der zweite und/oder ein anderer Entlüftungs-betriebsmodus so bereitgestellt, dass das erste Entlüftungsventil zu einem Zeitpunkt t1 geöffnet wird und dass das Bypass-Ventil zu einem Zeitpunkt t2 geöffnet wird, und dass der Zeitpunkt t1 zeitlich vor dem Zeitpunkt t2 liegt. Hierdurch kann ein Entlüftungsknall von dem Entlüftungsventil entlüftet werden, so dass daraufhin auf eine schnellere Entlüftung ohne Entlüftungsknall unter Zuhilfenahme des Bypass-Ventils umgeschaltet werden kann.

In einer weiteren Weiterbildung der Druckluftversorgungsanlage ist der zweite und/oder ein anderer Entlüftungs-Betriebsmodus so bereitgestellt, dass das erste Entlüftungsventil zu einem Zeitpunkt t3 geschlossen wird und dass das Bypass-Ventil zu einem Zeitpunkt t4 geschlossen wird, und dass der Zeitpunkt t3 zeitlich nach dem Zeitpunkt t4 liegt.

In einer weiteren bevorzugten Weiterbildung kann für die Durchführung eines Befüllungsprozesses in der Druckluftversorgungsanlage zwischen dem ersten und dem zweiten Befüll-Betriebsmodus gewählt werden. Bevorzugt erfolgt eine Wahl des Betriebsmodus automatisiert. Beispielsweise kann das Schließen einer Tür zur Aktivierung des ersten oder zweiten Befüll-Betriebsmodus führen, damit nach einem Absenken zum Einsteigen, das Fahrzeug schnell in einen fahrbereiten Zustand mit einem entsprechenden Luftdruckniveau in der Pneumatikanlage gebracht werden kann.

In einer Weiterbildung der Druckluftversorgungsanlage ist ein Rückschlagventil in der Pneumatikhauptleitung als ein 4/2-Wege-Ventil, welches eine Entlüftung der ersten Entlüftungsleitung steuert, ausgebildet. Dies ist vorteilhaft, da dadurch eine kompakte Kombination von Rückschlagventil aus der Pneumatikhauptleitung und erstem Entlüftungsventil aus der ersten Entlüftungsleitung möglich ist, wie später anhand von in den Figuren dargestellten Ausführungsformen der Druckversorgungsanlage genauer erläutert wird.

In einer Weiterbildung sind alle Ventile der Druckluftversorgungsanlage elektromagnetisch steuerbar, so dass sie durch ein elektrisches Steuerungssystem angesteuert und in ihrer jeweiligen Stellung verändert werden können.

Die Steuerung und Regelung berücksichtigt die Regeneration des Trockenmittels unter Angabe einzustellender Regenerationszyklen.

Nachfolgend werden bevorzugte Weiterbildungen des erfindungsgemäßen pneumatischen Systems gemäß dem zweiten Aspekt der Erfindung beschrieben.

In einer bevorzugten Weiterbildung des pneumatischen Systems, ist jedem Reifen der Luftfederanlage eine Galerie und eine an der Galerie pneumatisch angeschlossene Zweigleitung mit einem Balg und/oder einem Druckluftreservoir sowie einem dem Balg und/oder dem Druckluftreservoir vorgeordneten Wegeventil zugeordnet. Durch das dem jeweiligen Reifen zugeordnete erste Wegeventil kann jeder Reifen einzeln belüftet und entlüftet werden. Insbesondere kann durch die erfindungsgemäße Druckluftversorgungsanlage jeder Reifen einzeln sehr schnell entlüftet und auch belüftet werden. In dieser Weiterbildung ist durch ein unterschiedliches Entlüften der Pneumatik von verschiedenen Reifen auch ein einseitiges, insbesondere linkseitiges oder rechtseitiges, Absenken des die Druckluftversorgungsanlage aufweisenden Fahrzeugs möglich. So senkt sich ein Fahrzeug in einer Variante dieser Weiterbildung immer auf derjenigen Seite, auf der eine Tür zum Einsteigen geöffnet wird. Dies kann beispielsweise über ein mit dem pneumatischen System funktional verbundenes Sensorsystem realisiert werden, wobei das Sensorsystem Sensoren aufweist, die ein Sensorsignal senden, wenn eine Tür des Fahrzeugs geöffnet wird.

Nachfolgend werden bevorzugte Weiterbildungen des erfindungsgemäßen Verfahrens zum Betreiben einer Pneumatikanlage gemäß dem dritten Aspekt der Erfindung beschrieben.

In einer Weiterbildung erfolgt das Befüllen in einem ersten Befüll-Betriebsmodus über das Hauptleitungsventil und das Bypass-Ventil gleichzeitig, wobei das Bypass-Ventil und ein Befüllventil, über welches ein Druckluftreservoir an die Pneumatikhauptleitung angeschlossen ist, gleichzeitig geöffnet sind, so dass die Pneumatikanlage über den vorbestimmten Zeitraum, bevorzugt über einen gesamten Zeitraum, eines Befüllvorgangs über die Regenerationsdrossel und über die Bypass-Leitung befüllt wird.

In einer weiteren Weiterbildung erfolgt das Befüllen der Pneumatikanlage mit Druckluft über einen zweiten Befüll-Betriebsmodus, in welchem das Bypass-Ventil geschlossen ist, so dass die Pneumatikanlage über den vorbestimmten Zeitraum, bevorzugt über den gesamten Zeitraum, eines Befüllvorgangs nur über die Regenerationsdrossel befüllt wird.

In einer Weiterbildung erfolgt das Entlüften in einem ersten Entlüftungs-Betriebsmodus nur über das Entlüftungsventil, so dass die Pneumatikanlage ausschließlich über den vorbestimmten Zeitraum, bevorzugt über den gesamten Zeitraum, eines Entlüftungsvorgangs über die Regenrationsdrossel und nicht über das Bypass-Ventil entlüftet wird.

In einer bevorzugten Weiterbildung erfolgt das Entlüften in einem zweiten Entlüftungs-Betriebsmodus über die Regenerationsdrossel und das Bypass-Ventil gleichzeitig, wobei das Entlüftungsventil und das Bypass-Ventil gleichzeitig geöffnet sind, so dass die Pneumatikanlage über den vorbestimmten Zeitraum eines Entlüftungsvorgangs über die Entlüftungsdrossel und über die Bypass-Leitung entlüftet wird.

In einer Weiterbildung des Verfahrens gemäß dem dritten Aspekt der Erfindung wird eine Feuchtigkeit von Luft innerhalb der Pneumatikanlage durch wiederholtes Entlüften und Befüllen der Pneumatikanlage bei geschlossenem Bypass-Ventil reduziert. In dieser Weiterbildung können die Pneumatikanlage und die Druckluftversorgungsanlage vor Korrosion und dadurch entstehende Störungen in der Funktionalität geschützt werden. Insbesondere können wiederholte Entlüftungs- und Befüllungszyklen vorteilhaft ausgeführt werden, wenn die Pneumatikanlage temporär nicht aktiv genutzt wird.

Diese und andere bevorzugte Weiterbildungen und Ausführungsformen der Erfindung sind Gegenstand der Unteransprüche und Zeichnungen und präzisieren sowohl die Druckluftversorgungsanlage als auch das Verfahren hinsichtlich besonders vorteilhafter Ausbildungen, vorzugsweise in Bezug auf eine Luftfederanlage eines Fahrzeugs. Wie im Rahmen des allgemeinen Aspekts der Erfindung erläutert ist das Konzept der Erfindung jedoch nicht beschränkt auf die Weiterbildung in Bezug auf eine Luftfederanlage eines Fahrzeugs.

Insbesondere solche Ausführungsformen der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden dargestellten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlieher Funktion sind, dort wo sinnvoll, der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsformen sowie anhand der folgenden Zeichnung. Im Einzelnen zeigt die Zeichnung in:

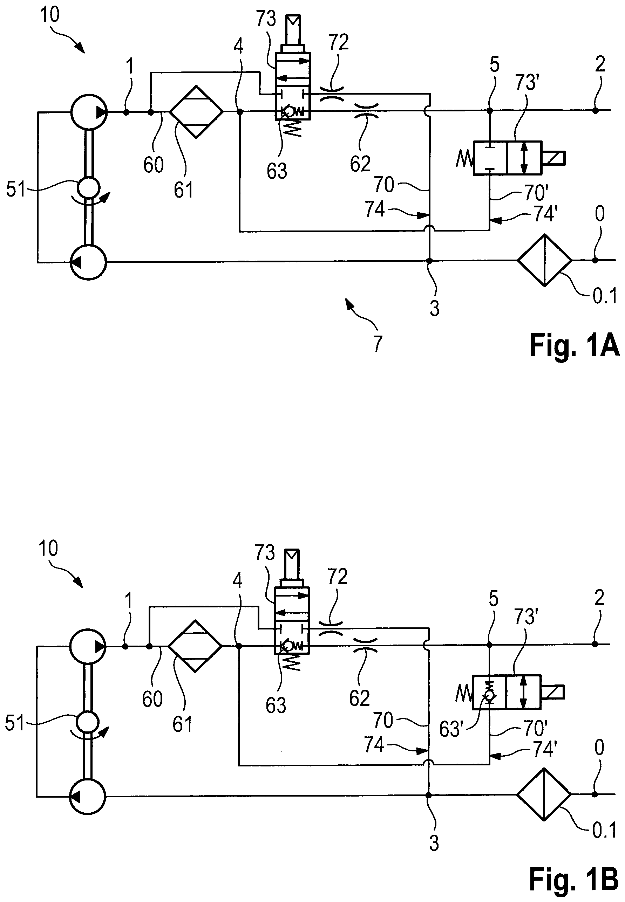

- FIG. 1A, 1B: eine erste Ausführungsform einer Druckluftversorgungsanlage gemäß einem ersten Aspekt der Erfindung, mit einem zweistufigen Kompressor, einem 4/2-Wege-Rückschlagventil als Entlüftungsventil und einem 2/2-Wege-Ventil (FIG. 1A) oder einem 2/2-WegeRückschlagventil (FIG. 1B) als Bypass-Ventil;

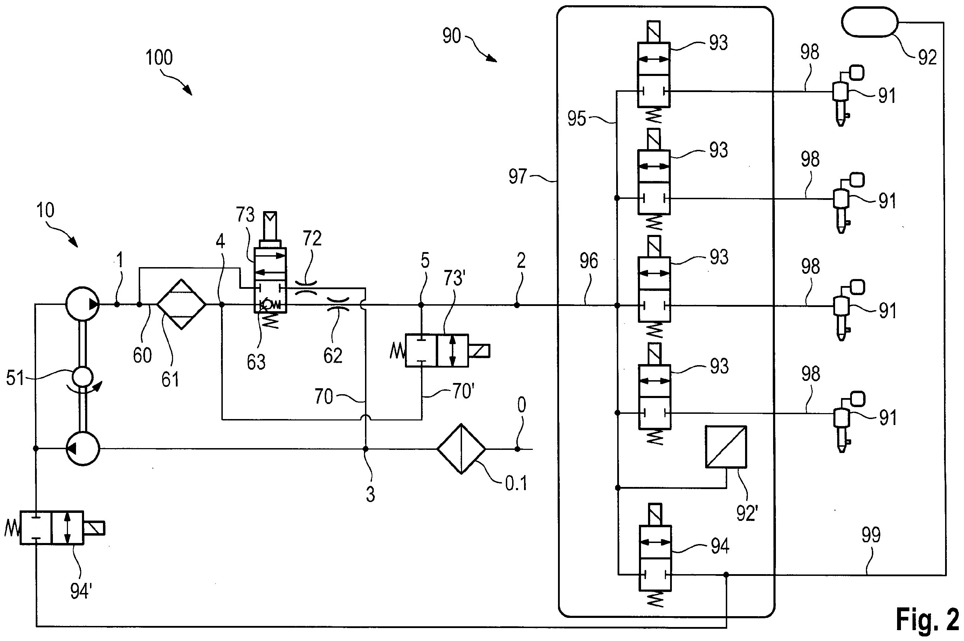

- FIG. 2: eine Ausführungsform eines pneumatischen Systems gemäß einem zweiten Aspekt der Erfindung, mit einer Druckluftanlage gemäß der ersten Ausführungsform und einer Pneumatikanlage mit einem Druckluftreservoir und vorgeordnetem Wegeventil an jedem Balg

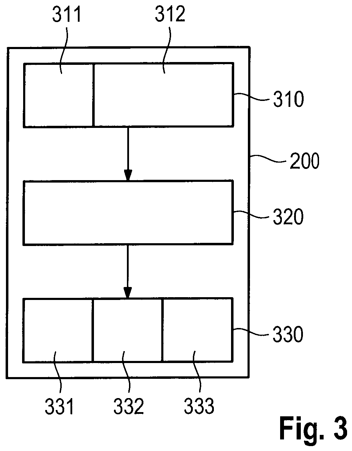

- FIG. 3: eine Ausführungsform einer Einrichtung gemäß einem vierten Aspekt der Erfindung, die ausgebildet ist, eine Ausführungsform eines Verfahrens zum Betreiben einer Pneumatikanlage, insbesondere einer Luftfedernlage eines Fahrzeugs, gemäß einem dritten Aspekt der Erfindung zu steuern und/oder zu regeln.

FIG. 1A zeigt eine erste Ausführungsform einer Druckluftversorgungsanlage 10 gemäß einem ersten Aspekt der Erfindung, mit einem zweistufigen Kompressor 51, einem 4/2-Wege-Rückschlagventil als Entlüftungsventil 73 und einem 2/2-Wege-Ventil als Bypass-Ventil 73'.

Die Druckluftversorgungsanlage 10 ist in der ersten Ausführungsform ausgebildet, zum Betreiben einer Pneumatikanlage, insbesondere einer Luftfederanlage eines Fahrzeugs, genutzt zu werden. Dafür weist sie eine Druckluftzuführung 1, einen Druckluftanschluss 2 zur in FIG. 1A und 1B nicht dargestellten Pneumatikanlage, einen Entlüftungsanschluss 3 zur Umgebung 7 und eine Pneumatikhauptleitung 60 auf. Die Pneumatikhauptleitung 60 ist hierzu zwischen der Druckluftzuführung 1 und dem Druckluftanschluss 2 angeordnet und weist einen Lufttrockner 61, eine Regenerationsdrossel 62 und ein Rückschlagventil 63 auf. Zwischen der Pneumatikhauptleitung 60 und dem Entlüftungsanschluss 3 ist eine Entlüftungsleitung 70 ausgebildet die ein Entlüftungsdrossel 72 und das Entlüftungsventil 73 aufweist. Das Entlüftungsventil 73 ist in dieser Ausführungsform als pneumatisches Ventil ausgebildet. Weiterhin ist zwischen dem Druckluftanschluss 2 und dem Lufttrockner 61 eine Bypass-Leitung 70' angeordnet, die ein zusätzliches Bypass-Ventil 73' aufweist, welches als 2/2-Wege-Ventil ausgebildet ist. In der dargestellten Ausführungsform ist das Bypass-Ventil 73' als elektrisches Ventil ausgebildet. In weiteren nicht dargestellten Ausführungsformen ist das Bypass-Ventil beispielsweise als pneumatisches Ventil ausgebildet. Die Bypass-Leitung 70' ist dabei über einen ersten und einen zweiten Anschlusspunkt 4, 5 an die Pneumatikhauptleitung 60 angeschlossen. Der erste Anschlusspunkt 4 ist zwischen dem Lufttrockner 61 und der Regenerationsdrossel 62 angeordnet, während der zweite Anschlusspunkt 5 in dieser Ausführungsform zwischen der Regenerationsdrossel (62) und dem Druckluftanschluss (2) angeordnet ist. Eine in FIG. 1A und 1B nicht dargestellte Ansteuerung des Bypass-Ventils 73' ist so bereitgestellt, dass ein Befüllen und Entlüften der Pneumatikanlage 90 unter Umgehung der Regenerationsdrossel 62 über das Bypass-Ventil 73' möglich ist, wobei der zum Befüllen und/oder Entlüften ausgebildete Luftstrom über den Lufttrockner 61 geführt wird.

Eine Befüllung durch die Druckluftversorgungsanlage 10 wird durch einen als zweistufigen Kompressor 51 ausgebildeten Luftverdichter im Vergleich zur Nutzung eines einfachen Kompressors beschleunigt. Der zweistufige Kompressor 51 ist dafür sowohl mit der Druckluftzuführung 1 als auch mit der Pneumatikhauptleitung 60 verbunden. Dadurch kann er bei Vorliegen eines entsprechenden Betriebsmodus die mit der Druckluftversorgungsanlage 10 verbundene Pneumatikanlage besonders effektiv mit Druckluft befüllen. Dabei ist insbesondere vorteilhaft, dass die Bypass-Leitung 70' zusätzlich zum durch die Regenerationsdrossel 62 gebildeten Strömungsquerschnitt einen weiteren Strömungsquerschnitt für den zur Befüllung genutzten Luftstrom bereitstellt. Für die erfindungsgemäße Druckluftversorgungsanlage 10 ist daher eine schnelle Befüllung möglich.

Dadurch das der Entlüftungsanschluss 3 zur Entlüftung der Entlüftungsleitung 70 verwendet wird und außerdem auch mit einer Luftzuführung 0 zum Befüllen der Pneumatikanlage mit Druckluft verbunden ist, kommt die Druckluftversorgungsanlage 10 dieser ersten Ausführungsform mit besonders wenigen Bauteilen aus und es braucht nur ein Luftfilter 0.1 verwendet werden, der direkt an dem Entlüftungsanschluss 3 angebracht ist.

Das Entlüftungsventil 73 ist ein 4/2-Wege-Ventil und lässt in einer ersten Stellung die Entlüftungsleitung 70 geschlossen und bildet in der Pneumatikhauptleitung 60 das Rückschlagventil 63. Dieses Rückschlagventil 63 öffnet sich entsprechend einer Federkraft innerhalb des Rückschlagventils 63 bei einem geeignet großen Befüllungsdruck durch den zweistufigen Kompressor 51 und ermöglicht dadurch ein Befüllen der an die Druckluftversorgungsanlage 10 angeschlossenen Pneumatikanlage. In einer zweiten Stellung des Entlüftungsventils 73 ist die Entlüftungsleitung 70 für einen Luftstrom in Richtung des Entlüftungsanschlusses 3, also bei einer Entlüftung, geöffnet, und das Rückschlagventil 63 in der Pneumatikhauptleitung 60 ist durch ein Ventil ersetzt, welches einen Luftstrom in Richtung des Lufttrockner 61 erlaubt, was ebenfalls für eine Entlüftung der Fall ist.

Eine Ansteuerung des Entlüftungsventils 73 zum Einstellen der Stellung kann durch ein elektromagnetisches Signal erfolgen, das von einer nicht dargestellten Steuerung der Druckluftversorgungsanlage 10 gesendet wird.

In der Pneumatikhauptleitung 60 befindet sich die Regenerationsdrossel 62 in einem Entlüftungsweg der Druckluft für eine Entlüftung durch die Entlüftungsleitung 70, wobei die Regenerationsdrossel 62 eine Nennweite zwischen 0,5 mm und 4,0 mm, bevorzugt 1,5 mm, aufweist. In dem Entlüftungskanal 70 befindet sich die Entlüftungsdrossel 72, die eine Nennweite zwischen 2,6 mm und 8,0 mm, bevorzugt von 3,6 mm, aufweist, so dass die Regenerationsdrossel 62 eine Begrenzung des Entlüftungsstroms durch die Entlüftungsleitung 70 durch einen minimalen Strömungsquerschnitt 74 für einen Luftstrom durch die erste Entlüftungsleitung 70 bewirkt.

Das zusätzliche Bypass-Ventil 73' in der Bypass-Leitung 70' ist ein 2/2-Wege-Ventil, das in einer ersten in FIG. 1A dargestellten Stellung geschlossen ist. Daher kann das als 2/2-Wege-Ventil ausgebildete Bypass-Ventil 73' nur durch eine aktive Veränderung der Ventilstellung von einem über die Bypass-Leitung 70' geführten Luftstrom passiert werden.

In einer in FIG. 1B dargestellten optionalen Ausführung der Druckluftversorgungseinheit 10 ist das Bypass-Ventil 73' als ein Rückschlagventil 63' ausgebildet. Abhängig von einer Federkraft einer das Rückschlagventil 63' schließenden Feder, kann ein Befüllungsdruck ausreichender Größe zu einem Öffnen des Rückschlagventils führen. Dadurch kann ohne eine aktive Veränderung der Stellung des Bypass-Ventils 73' die Bypass-Leitung 70' bei zu hohem Befüllungs-Staudruck vor der Regenerationsdrossel 62, beispielsweise während eines Betriebs des Kompressors 51, für einen Luftstrom genutzt werden, um den Staudruck vor der Drossel 62 zu reduzieren. In der dargestellten Ausführungsform ist eine Federkraft der schließenden Feder des Rückschlagventils 63' größer als die Federkraft des in der Pneumatikhauptleitung 60 angeordneten Rückschlagventils 63. Hierdurch ist sichergestellt, dass sich das Rückschlagventil 63' bei größeren Drücken als das Rückschlagventil 63 öffnet.

In der für die Ausführungsformen aus FIG.1A und Fig. 1B identischen zweiten Stellung des Bypass-Ventils 73' ist die Bypass-Leitung 70' für Luftströme in Befüllungs- und Entlüftungsrichtung geöffnet. Dabei hat das Bypass-Ventil 73' in der zweiten Stellung eine Nennweite 74' zwischen 1 mm und 4 mm, bevorzugt 2,4 mm. Folglich kann das Bypass-Ventil 73' für eine Entlüftung und für eine Belüftung der mit der Druckluftversorgungsanlage 10 über den Druckluftanschluss 2 verbundenen Pneumatikanlage verwendet werden.

Eine Ansteuerung des Bypass-Ventils 73' zum Einstellen der Stellung erfolgt durch ein elektromagnetisches Signal, was von einer nicht dargestellten Steuerung der Druckluftversorgungsanlage 10 gesendet wird.

Ein Vergleich der oben angegebenen Nennweiten zeigt, dass in der Druckluftversorgungsanlage 10 eine Befüllung oder Entlüftung der Pneumatikanlage ausschließlich durch die Regenerationsdrossel 62 deutlich langsamer erfolgt als durch eine Kombination aus Regenerationsdrossel 62 und Bypass-Leitung 70'. Folglich kann abhängig von einem gewünschten Betriebsmodus eine sehr schnelle Befüllung oder Entlüftung der Pneumatikanlage über die Bypass-Leitung 70' und die Regenerationsdrossel 62 erfolgen, oder eine langsamere und somit kontrollierte Befüllung oder Entlüftung bei geschlossenem Bypass-Ventil 73' realisiert werden. Eine langsame Entlüftung bei geschlossenem Bypass-Ventil 73' erlaubt dabei eine bessere Trocknerregeneration als sie im Falle einer schnellen Entlüftung möglich ist. Eine Entlüftung die nur einen Luftstrom über die Bypass-Leitung 70' und nicht über die Regenerationsdrossel 62 erfolgt, ist in der vorliegenden Ausführungsform durch das als 4/2-Wege-Ventil ausgebildete Entlüftungsventil 73 ausgeschlossen, da ein Luftstrom durch die Entlüftungsleitung 70 nur in der zweiten Stellung möglich ist, in der auch ein Luftstrom durch die Pneumatikhauptleitung 60 erfolgen kann.

Eine mögliche Nutzung der ersten Ausführungsform der Druckluftversorgungsanlage 10 ist derart gestaltet, dass die langsamere Entlüftung über die Regenerationsdrossel 62 bei laufender Fahrt eines mit der Pneumatikanlage ausgestatteten Fahrzeugs erfolgt. Wohingegen die schnellere Entlüftung über die Regenerationsdrossel 62 und die Bypass-Leitung 70' ein schnelleres Absenken eines mit der Pneumatikanlage ausgestatteten stehenden Fahrzeugs bewirkt, um beispielsweise ein komfortableres Einsteigen in das Fahrzeug zu ermöglichen. Weiterhin ist die erste Ausführungsform der Druckluftversorgungsanlage 10 so ausgestaltet, dass eine langsame Befüllung über die Regenerationsdrossel 62 bei laufender Fahrt eines mit der entsprechenden Pneumatikanlage ausgestatteten Fahrzeugs erfolgt. Wohingegen die schnellere Befüllung über die Regenerationsdrossel 62 und die Bypass-Leitung 70' ein schnelleres Erreichen eines gewünschten Luftdruckniveaus innerhalb der Pneumatikanlage ermöglicht, wie es beispielsweise nach einem schnellen Absenken zum komfortablen Einsteigen in das mit der entsprechenden Pneumatikanlage ausgestattete Fahrzeug wünschenswert sein kann.

FIG. 2 zeigt eine Ausführungsform eines pneumatischen Systems 100 gemäß einem zweiten Aspekt der Erfindung, mit einer Druckluftanlage 10 gemäß der ersten Ausführungsform und einer Pneumatikanlage 90 mit einem Druckluftreservoir 92 und vorgeordnetem ersten Wegeventil 93 an jedem Balg 91.

Die Druckluftversorgungsanlage 10 ist genauso ausgebildet wie in der in FIG. 1A gezeigten ersten Ausführungsform. Zusätzlich ist die an den Druckluftanschluss 2 angeschlossene Pneumatikanlage 90 schematisch dargestellt. Die Pneumatikanlage 90 ist in Form einer Luftfederanlage ausgebildet.

Die Luftfederanlage weist in diesem Fall eine Anzahl von vier sogenannten Bälgen 91 auf, die jeweils einem Rad des nicht näher dargestellten Fahrzeugs zugeordnet sind und eine Luftfeder des Fahrzeugs bilden. Des Weiteren weist die Luftfederanlage ein Druckluftreservoir 92 zur Speicherung schnell verfügbarer Druckluft für die Bälge 91 auf. Den Bälgen 91 ist jeweils in einer als Feder-Zweigleitung ausgebildeten ersten Zweigleitung 98 ein als Magnetventil ausgebildetes erstes Wege-Ventil 93 vorgeordnet, welches jeweils als Niveauregelventil zum Öffnen oder Schließen einer mit einem Balg 91 gebildeten Luftfeder dient. Die Magnetventile 93 in den Feder-Zweigleitungen 98 sind als 2/2-WegeVentile ausgebildet. Dem Druckluftreservoir 92 ist in einer als Reservoir-Zweigleitung ausgebildeten zweiten Zweigleitung 99 ein als Magnetventil ausgebildestes zweites Wege-Ventil 94 in Form eines weiteren 2/2-Wege-Ventils als Reservoirventil vorgeordnet. Die Magnetventile 93, 94 sind an eine gemeinsame Sammelleitung, eine Galerie 95 bildende Pneumatikleitung, angeschlossen. Die Galerie 95 ist über eine weitere Pneumatikleitung 96 zur Bildung einer pneumatischen Verbindung mit einem Druckluftanschluss 2 der Druckluftversorgungsanlage 10 pneumatisch verbunden. Vorliegend sind die Magnetventile 93, 94 in einem Ventilblock 97 mit fünf Ventilen angeordnet. Die Magnetventile 93, 94 sind in FIG. 2 in einem stromlosen Zustand gezeigt - dabei sind die Magnetventile 93, 94 als stromlos geschlossene Magnetventile gebildet.

Weiterhin ist in der Pneumatikanlage 90 ein Spannung/Druck-Sensor 92' bereitgestellt, welcher einen Druck in der Galerie 95 der Pneumatikanlage 90 messen kann. Der Druck wird an eine in FIG. 2 nicht dargestellte Steuerung des pneumatischen Systems gesendet, welche die Ventile 73, 73', 93, 94 des pneumatischen Systems unter anderem abhängig von dem gemessenen Druck steuert oder steuern kann.

Andere, hier nicht gezeigte Ausführungsformen können eine anderen Anordnung der Magnetventile 93, 94 realisieren - es können auch weniger Magnetventile im Rahmen des Ventilblocks genutzt werden.

Insbesondere ist das als Rückschlagventil 63 in der Pneumatikhauptleitung 60 angeordnete Trennventil in einer hier nicht gezeigten Ausführungsform nicht in der Druckluftversorgungsanlage 10 anzuordnen. Vielmehr kann ein Trennventil auch in der Pneumatikanlage 90 angeordnet sein, beispielsweise auch im Rahmen des Ventilblocks 97. In einer weiteren nicht gezeigten Ausführungsform ist in der Pneumatikhauptleitung kein Rückschlagventil, sondern ein Magnetventil oder ein pneumatisches Relaisventil oder ein anderes geeignetes Ventil angeordnet.

Zusätzlich zu dem als Magnetventil ausgebildeten Reservoirventil 94, wird das Druckluftreservoir 92 auch über ein Befüllventil 94' mit der Pneumatikhauptleitung 60 der Druckluftversorgungsanlage verbunden. Eine dadurch ermöglichte Strömung von Druckluft aus dem Druckluftreservoir 92 kann zusätzlich von dem zweistufigen Kompressor 51 verdichtet werden, bevor sie über die Druckluftzuführung 1 in die Pneumatikhauptleitung 60 gelangt, was ein besonders effektives und schnelles Befüllen der Pneumatikanlage 90 mit Druckluft zur Folge hat. Es kann somit in der dargestellten Ausführungsform des pneumatischen Systems zwischen einem Befüllen der Pneumatikanlage über das Reservoirventil 94 und einem Befüllen über das Befüllventil 94' gewählt werden. Hierbei sorgt das Befüllen über das Befüllventil 94' für den Vorteil, dass durch eine Führung des Luftstroms durch den Trockner 61, eine Feuchtigkeit des Luftstroms reduziert wird, was vor Schäden durch Korrosion innerhalb der Pneumatikanlage 90 schützt. Außerdem kann, wie bereits im Rahmen von FIG. 1A erläutert, im Falle einer Befüllung über das Befüllventil 94' zwischen langsamen Befüllung ausschließlich über die Regenerationsdrossel 62 mit einer entsprechend guten Trocknung und einer schnellen Befüllung über Trocknerdrossel 62 und Bypass-Leitung 70' gewählt werden.

FIG. 3 zeigt eine Ausführungsform einer Einrichtung (200) gemäß einem vierten Aspekt der Erfindung. Die Einrichtung (200) ist ausgebildet eine Ausführungsform eines Verfahrens zum Betreiben einer Pneumatikanlage, insbesondere einer Luftfedernlage eines Fahrzeugs, gemäß einem dritten Aspekt der Erfindung zu steuern und/oder zu regeln. Das Verfahren umfasst die im Folgenden angegebenen Schritte.

In einem ersten Schritt 310 des Verfahrens wird die Pneumatikanlage mittels einer über eine Pneumatikhauptleitung und über den Lufttrockner geführte Druckluftströmung aus der Druckluftversorgungsanlage über ein in der Pneumatikhauptleitung angeordnetes Hauptleitungsventil und/oder über ein Bypass-Ventil befüllt. Hierbei ist die Einrichtung (200) ausgebildet, sowohl einen Boostmodus (311) als auch mindestens einen weiteren ersten Befüll-Betriebsmodus (312) zum Befüllen der Pneumatikanlage bereitzustellen.

Im nächsten Schritt 320 wird der Druck in der Pneumatikanlage gehalten, wobei die Pneumatikhauptleitung gegen eine Druckluftströmung aus der Pneumatikanlage mit dem Entlüftungsventil und dem Bypass-Ventil gesperrt wird.

Ein finaler Schritt 330 des Verfahrens umfasst ein Entlüften der Pneumatikanlage mittels der über die Pneumatikhauptleitung und über den Lufttrockner geführten Druckluftströmung aus der Pneumatikanlage über ein, mit einer Entlüftungsdrossel verbundenes, Entlüftungsventil oder über das Entlüftungsventil und ein Bypass-Ventil. Die Einrichtung (200) ist ausgebildet, hierfür einen ersten (331), einen zweiten (332) und einen dritten Entlüftungs-Betriebsmodus (333) bereitzustellen.

### Bezugszeichenliste:

- 0.1: Luftfilter
- 0: Luftzuführung
- 1: Druckluftzuführung
- 2: Druckluftanschluss
- 3: Entlüftungsanschluss
- 4: erster Anschlusspunkt
- 5: zweiter Anschlusspunkt
- 7: Umgebung
- 10: Druckluftversorgungsanlage
- 51: zweistufiger Kompressor
- 60: Pneumatikhauptleitung
- 61: Lufttrockner
- 62: Regenerationsdrossel
- 63: Rückschlagventil
- 63': Rückschlagventil der Bypass-Leitung
- 70: Entlüftungsleitung
- 70': Bypass-Leitung
- 72: Entlüftungsdrossel
- 73: Entlüftungsventil
- 73': Bypass-Ventil
- 74: Strömungsquerschnitt der Entlüftungsleitung
- 74': Strömungsquerschnitt der Bypass-Leitung
- 90: Pneumatikanlage
- 91: Balg
- 92: Druckluftreservoir
- 92': Spannung/Druck-Sensor
- 93: erstes Wege-Ventil
- 94: zweites Wege-Ventil; Reservoirventil
- 94': Befüllventil
- 95: Galerie
- 96: weitere Pneumatikleitung
- 97: Ventilblock
- 98: erste Zweigleitung, Feder-Zweigleitung
- 99: zweite Zweigleitung, Reservoir-Zweigleitung
- 100: Pneumatisches System
- 200: Einrichtung
- 310: erster Schritt des Verfahrens
- 311: Boostmodus
- 312: erster Befüll-Betriebsmodus
- 320: nächster Schritt des Verfahrens
- 330: finaler Schritt des Verfahrens
- 331: erster Entlüftungs-Betriebsmodus
- 332: zweiter Entlüftungs-Betriebsmodus
- 333: dritter Entlüftungs-Betriebsmodus

## Patentansprüche

1. Druckluftversorgungsanlage (10) zum Betreiben einer Pneumatikanlage (90), insbesondere einer Luftfederanlage eines Fahrzeugs, aufweisend:
- eine Druckluftzuführung (1),
- einen Druckluftanschluss (2) zur Pneumatikanlage (90),
- mindestens einen Entlüftungsanschluss (3) zur Umgebung (7),
- eine Pneumatikhauptleitung (60) zwischen der Druckluftzuführung (1) und dem Druckluftanschluss (2), die einen Lufttrockner (61) und eine Regenerationsdrossel (62), aufweist,
- eine Entlüftungsleitung (70) zwischen der Pneumatikhauptleitung (60) und einem Entlüftungsanschluss (3), die ein Entlüftungsventil (73) und eine Entlüftungsdrossel (72) aufweist,
- eine Bypass-Leitung (70') zwischen dem Druckluftanschluss (2) und dem Lufttrockner (61), die ein zusätzliches Bypass-Ventil (73') aufweist, welches als ein 2/2-Wege-Ventil ausgebildet ist, und das einen über den Lufttrockner (61) geführten Luftstrom zum Befüllen und Entlüften der Pneumatikanlage (90) unter Umgehung der Regenerationsdrossel (62) ermöglicht,
die weiterhin ein Druckluftreservoir (92) aufweist, insbesondere zusätzlich oder alternativ als Teil einer Pneumatikanlage (90), das über ein Befüllventil (94') an der Pneumatikhauptleitung (60) angeschlossen ist und das ausgebildet ist, bei Vorliegen eines Boostmodus (311) der Druckluftversorgungsanlage, über das Befüllventil (94') und die Pneumatikhauptleitung (60) die Pneumatikanlage (90) mit Druckluft zu befüllen und
die ausgebildet ist, einen ersten Befüll-Betriebsmodus (311, 312) bereitzustellen, in dem das Bypass-Ventil (73') und das Befüllventil (94') zumindest zeitweise gleichzeitig geöffnet sind, so dass die Pneumatikanlage (90) über einen vorbestimmten Zeitraum eines Befüllvorgangs durch einen Luftstrom aus dem Druckluftreservoir (92) befüllt werden kann, der teilweise nicht durch die Regenerationsdrossel (62) sondern durch einen minimalen Strömungsquerschnitt (74') der Bypass-Leitung (70') begrenzt ist.

2. Druckluftversorgungsanlage gemäß Anspruch 1, bei der die Bypass-Leitung (70') über einen ersten und einen zweiten Anschlusspunkt (4, 5) an die Pneumatikhauptleitung (60) angeschlossen ist, wobei der erste Anschlusspunkt (4) zwischen dem Lufttrockner (61) und der Regenerationsdrossel (62) angeordnet ist und der zweite Anschlusspunkt (5) zwischen der Regenerationsdrossel (62) und dem Druckluftanschluss (2) angeordnet ist.

3. Druckluftversorgungsanlage gemäß Anspruch 1 oder 2, bei der das Entlüftungsventil (73) ein Rückschlagventil (63) aufweist und/oder das zusätzliche Bypass-Ventil ein weiteres Rückschlagventil (63') aufweist.

4. Druckluftversorgungsanlage gemäß einem der Ansprüche 1 bis 3, bei der die Bypass-Leitung (70') einen größeren minimalen Strömungsquerschnitt (74') eines durchströmenden Druckluftstroms erlaubt als die Regenerationsdrossel (62).

5. Druckluftversorgungsanlage gemäß einem der Ansprüche 1 bis 4, bei der die Entlüftungsleitung (70) einen größeren minimalen Strömungsquerschnitt (74) eines durchströmenden Druckluftstroms erlaubt als der Querschnitt der Bypass-Leitung (74').

6. Druckluftversorgungsanlage gemäß einem der vorhergehenden Ansprüche, die weiterhin einen zweistufigen Kompressor (51) aufweist, der sowohl mit der Luftzuführung (0), als auch mit der Pneumatikhauptleitung (60) verbunden ist und der ausgebildet ist, in einem entsprechenden Befüll-Betriebsmodus (312) der Druckluftversorgungsanlage (10) die Pneumatikanlage (90) mit Druckluft zu befüllen.

7. Druckluftversorgungsanlage gemäß einem der vorhergehenden Ansprüche, bei der die Pneumatikhauptleitung (60) weiterhin ein Rückschlagventil aufweist.

8. Druckluftversorgungsanlage gemäß einem der vorhergehenden Ansprüche, die ausgebildet ist, einen zweiten Entlüftungs-Betriebsmodus (332) bereitzustellen, in dem das Entlüftungsventil (73) und das Bypass-Ventil (73') gleichzeitig geöffnet sind, so dass die Pneumatikanlage (90) über den gesamten Zeitraum eines Entlüftungsvorgangs über die Entlüftungsleitung (70) durch einen Luftstrom entlüftet werden kann, der teilweise nicht durch die Regenerationsdrossel (62) sondern durch einen minimalen Strömungsquerschnitt (74') der Bypass-Leitung (70') begrenzt ist.

9. Druckluftversorgungsanlage gemäß Anspruch 8, bei der der zweite und/oder ein anderer Entlüftungs-Betriebsmodus (332, 333) so bereitgestellt ist, dass das erste Entlüftungsventil (73) zu einem Zeitpunkt t1 geöffnet wird und dass das Bypass-Ventil (73') zu einem Zeitpunkt t2 geöffnet wird, und dass der Zeitpunkt t1 zeitlich vor dem Zeitpunkt t2 liegt.

10. Druckluftversorgungsanlage gemäß Anspruch 8, bei der der zweite und/oder ein anderer Entlüftungs-Betriebsmodus (332, 333) so bereitgestellt ist, dass das erste Entlüftungsventil (73) zu einem Zeitpunkt t3 geschlossen wird und dass das Bypass-Ventil (73') zu einem Zeitpunkt t4 geschlossen wird, und dass der Zeitpunkt t3 zeitlich nach dem Zeitpunkt t4 liegt.

11. Pneumatisches System (100) mit der Druckluftversorgungsanlage nach einem der Ansprüche 1 bis 9, und einer Pneumatikanlage (90), die in Form einer Luftfederanlage gebildet ist, die eine Galerie (95) und wenigstens eine an der Galerie pneumatisch angeschlossene erste Zweigleitung (98) mit einem Balg (91) und/oder eine an der Galerie (95) pneumatisch angeschlossene zweite Zweigleitung (99) mit einem Druckluftreservoir (92), sowie einem dem Balg (91) vorgeordneten ersten Wege-Ventil (93) und/oder dem Druckluftreservoir (92) vorgeordneten zweiten Wege-Ventil (94) aufweist.

12. Verfahren zum Betreiben einer Druckluftversorgungsanlage (10) nach einem der Ansprüche 1 bis 9 und einer Pneumatikanlage (90), insbesondere einer Luftfederanlage eines Fahrzeugs, aufweisend die Schritte:
- Befüllen der Pneumatikanlage (90) mittels einer über eine Pneumatikhauptleitung (60) und über einen Lufttrockner (61) geführte Druckluftströmung aus der Druckluftversorgungsanlage (10) über ein in der Pneumatikhauptleitung angeordnetes Hauptleitungsventil (63) und/oder über ein Bypass-Ventil (73');
- Halten des Drucks in der Pneumatikanlage (90), wobei die Pneumatikhauptleitung (60) gegen eine Druckluftströmung aus der Pneumatikanlage (90) mit dem Entlüftungsventil (73) und dem Bypass-Ventil (73') gesperrt wird, und
- Entlüften der Pneumatikanlage (90) mittels der über die Pneumatikhauptleitung (60) und über den Lufttrockner (61) geführten Druckluftströmung aus der Pneumatikanlage über ein, mit einer Entlüftungsdrossel (72) verbundenes, Entlüftungsventil (73) oder über das Entlüftungsventil (73) und ein Bypass-Ventil (73') und
bei dem das Befüllen in einem ersten Befüll-Betriebsmodus (311) über ein Hauptleitungsventil (63) in der Pneumatikhauptleitung und das Bypass-Ventil (73') gleichzeitig erfolgt, wobei das Bypass-Ventil (73') und ein Befüllventil (94'), über welches ein Druckluftreservoir (92) an die Pneumatikhauptleitung (90) angeschlossen ist, gleichzeitig geöffnet sind, so dass die Pneumatikanlage (90) über den vorbestimmten Zeitraum eines Befüllvorgangs über die Regenerationsdrossel (62) und über die Bypass-Leitung (70') befüllt wird.

13. Verfahren gemäß Anspruch 12, bei dem das Entlüften in einem zweiten Entlüftungs-Betriebsmodus (332) über die Regenerationsdrossel (62) und das Bypass-Ventil (73') gleichzeitig erfolgt, wobei das Entlüftungsventil (73) und das Bypass-Ventil (73') gleichzeitig geöffnet sind, so dass die Pneumatikanlage (90) über den gesamten Zeitraum eines Entlüftungsvorgangs über die Entlüftungsdrossel (72) und über die Bypass-Leitung (70') entlüftet wird.

14. Verfahren gemäß einem der Ansprüche 12 oder 13, bei dem eine Feuchtigkeit von Luft innerhalb der Pneumatikanlage (90) durch wiederholtes Entlüften und Befüllen der Pneumatikanlage (90) bei geschlossenem Bypass-Ventil (73') reduziert wird.

## Claims

1. Compressed-air feed system (10) for operating a pneumatic system (90), in particular an air suspension system of a vehicle, having:
- a compressed-air supply (1),
- a compressed-air connection (2) to the pneumatic system (90),
- at least one ventilation connection (3) to the surroundings (7),
- a pneumatic main line (60) between the compressed-air supply (1) and the compressed-air connection (2), which pneumatic main line has an air dryer (61) and a regeneration throttle (62),
- a ventilation line (70) between the pneumatic main line (60) and a ventilation connection (3), which ventilation line has a ventilation valve (73) and a ventilation throttle (72),
- a bypass line (70') between the compressed-air connection (2) and the air dryer (61), which bypass line has an additional bypass valve (73') which is formed as a 2/2 directional valve and which permits an air flow conducted via the air dryer (61), and bypassing the regeneration throttle (62), for filling and ventilating the pneumatic system (90),
which furthermore has a compressed-air reservoir (92), in particular additionally or alternatively as part of a pneumatic system (90) which is connected via a filling valve (94') to the pneumatic main line (60) and which is designed to, in the presence of a boost mode (311) of the compressed-air feed system, fill the pneumatic system (90) with compressed air via the filling valve (94') and the pneumatic main line (60), and
which is designed to provide a first filling operating mode (311, 312) in which the bypass valve (73') and the filling valve (94') are at least temporarily simultaneously open, such that the pneumatic system (90) can, over a predetermined time period of a filling process, be filled by means of an air flow from the compressed-air reservoir (92), which flow is, in part, limited not by the regeneration throttle (62) but by a minimum flow cross section (74') of the bypass line (70').

2. Compressed-air feed system according to Claim 1, in which the bypass line (70') is connected via a first and a second connection point (4, 5) to the pneumatic main line (60), wherein the first connection point (4) is arranged between the air dryer (61) and the regeneration throttle (62), and the second connection point (5) is arranged between the regeneration throttle (62) and the compressed-air connection (2).

3. Compressed-air feed system according to Claim 1 or 2, in which the ventilation valve (73) has a check valve (63), and/or the additional bypass valve has a further check valve (63').

4. Compressed-air feed system according to one of Claims 1 to 3, in which the bypass line (70') permits a larger minimum flow cross section (74') of a throughflowing compressed-air flow than the regeneration throttle (62).

5. Compressed-air feed system according to one of Claims 1 to 4, in which the ventilation line (70) permits a larger minimum flow cross section (74) of a throughflowing compressed-air flow than the cross section of the bypass line (74')

6. Compressed-air feed system according to one of the preceding claims, which furthermore has a two-stage compressor (51) which is connected both to the air supply (0) and to the pneumatic main line (60) and which is designed to, in a corresponding filling operating mode (312) of the compressed-air feed system (10), fill the pneumatic system (90) with compressed air.

7. Compressed-air feed system according to one of the preceding claims, in which the pneumatic main line (60) furthermore has a check valve.

8. Compressed-air feed system according to one of the preceding claims, which is designed to provide a second ventilation operating mode (332) in which the ventilation valve (73) and the bypass valve (73') are simultaneously open, such that the pneumatic system (90) can, over the entire time period of a ventilation process, be ventilated via the ventilation line (70) by means of an air flow which is, in part, limited not by the regeneration throttle (62) but by a minimum flow cross section (74') of the bypass line (70').

9. Compressed-air feed system according to Claim 8, in which the second and/or another ventilation operating mode (332, 333) is provided such that the first ventilation valve (73) is opened at a time t1 and that the bypass valve (73') is opened at a time t2, and that the time t1 precedes the time t2.

10. Compressed-air feed system according to Claim 8, in which the second and/or another ventilation operating mode (332, 333) is provided such that the first ventilation valve (73) is closed at a time t3 and that the bypass valve (73') is closed at a time t4, and that the time t3 follows the time t4.

11. Pneumatic system (100) having the compressed-air feed system according to one of Claims 1 to 9, and having a pneumatic system (90) formed as an air suspension system which has a gallery (95) and at least one first branch line (98), which is pneumatically connected to the gallery and which has a bellows (91), and/or a second branch line (99), which is pneumatically connected to the gallery (95) and which has a compressed-air reservoir (92), and having a first directional valve (93) connected upstream of the bellows (91) and/or a second directional valve (94) connected upstream of the compressed-air reservoir (92).

12. Method for operating a compressed-air feed system (10) according to one of Claims 1 to 9 and a pneumatic system (90), in particular an air suspension system of a vehicle, having the steps:
- filling the pneumatic system (90) by means of a compressed-air flow, conducted via a pneumatic main line (60) and via an air dryer (61), from the compressed-air feed system (10) via a main line valve (63) arranged in the pneumatic main line and/or via a bypass valve (73');
- maintaining the pressure in the pneumatic system (90), wherein the pneumatic main line (60) is shut off, by means of the ventilation valve (73) and the bypass valve (73'), for prevention of a compressed-air flow out of the pneumatic system (90), and
- ventilating the pneumatic system (90) by means of the compressed-air flow, conducted via the pneumatic main line (60) and via the air dryer (61), from the pneumatic system via a ventilation valve (73) connected to a ventilation throttle (72) or via the ventilation valve (73) and a bypass valve (73'), and
in which the filling takes place, in a first filling operating mode (311), via a main line valve (63) in the pneumatic main line and via the bypass valve (73') simultaneously, wherein the bypass valve (73') and a filling valve (94'), via which a compressed-air reservoir (92) is connected to the pneumatic main line (90), are open simultaneously, such that the pneumatic system (90) is, over the predetermined time period of a filling process, filled via the regeneration throttle (62) and via the bypass line (70').

13. Method according to Claim 12, in which the ventilation in a second ventilation operating mode (332) takes place via the regeneration throttle (62) and the bypass valve (73') simultaneously, wherein the ventilation valve (73) and the bypass valve (73') are open simultaneously, such that the pneumatic system (90) is, over the entire time period of a ventilation process, ventilated via the ventilation throttle (72) and via the bypass line (70').

14. Method according to one of Claims 12 and 13, in which a humidity of air within the pneumatic system (90) is reduced by repeated ventilation and filling of the pneumatic system (90) with the bypass valve (73') closed.

## Revendications

1. Unité d'alimentation en air comprimé (10) destinée à faire fonctionner une unité pneumatique (90), en particulier une unité de suspension pneumatique d'un véhicule, ladite unité d'alimentation en air comprimé comprenant :
- une alimentation en air comprimé (1),
- un raccord d'air comprimé (2) menant à l'unité pneumatique (90),
- au moins un raccord de purge (3) menant à l'environnement (7),
- une conduite pneumatique principale (60) qui est placée entre l'alimentation en air comprimé (1) et le raccord d'air comprimé (2) et qui comprend un sécheur d'air (61) et un étranglement de régénération (62),
- une conduite de purge (70) qui est placée entre la conduite pneumatique principale (60) et un raccord de purge (3) et qui comporte une vanne de purge (73) et un étranglement de purge (72),
- une conduite de dérivation (70') qui est placée entre le raccord d'air comprimé (2) et le sécheur d'air (61) et qui comporte une vanne de dérivation supplémentaire (73') conçue comme une vanne à 2/2 voies et permettant à l'air de circuler dans le sécheur d'air (61) pour remplir et purger l'unité pneumatique (90) en contournant l'étranglement de régénération (62), qui comporte également un réservoir d'air comprimé (92), en particulier en complément ou en variante comme partie d'une unité pneumatique (90), qui est raccordé à la conduite pneumatique principale (60) par le biais d'une vanne de remplissage (94') et qui est conçu pour remplir l'unité pneumatique (90) avec de l'air comprimé, en présence d'un mode de suralimentation (311) de l'unité d'alimentation en air comprimé, par le biais de la vanne de remplissage (94') et de la conduite pneumatique principale (60) et qui est conçue pour fournir un premier mode de fonctionnement de remplissage (311, 312) dans lequel la vanne de dérivation (73') et la vanne de remplissage (94') sont ouvertes au moins temporairement en même temps de sorte que l'unité pneumatique (90) puisse être remplie, sur une durée prédéterminée d'un processus de remplissage, par un flux d'air provenant du réservoir d'air comprimé (92), qui est limité partiellement non pas par l'étranglement de régénération (62) mais par une section transversale d'écoulement minimale (74') de la conduite de dérivation (70').

2. Unité d'alimentation en air comprimé selon la revendication 1, dans laquelle la conduite de dérivation (70') est raccordée à la conduite pneumatique principale (60) par le biais d'un premier et d'un deuxième point de raccordement (4, 5), le premier point de raccordement (4) étant disposé entre le sécheur d'air (61) et l'étranglement de régénération (62) et le deuxième point de raccordement (5) étant disposé entre l'étranglement de régénération (62) et le raccord d'air comprimé (2) .

3. Unité d'alimentation en air comprimé selon la revendication 1 ou 2, dans laquelle la vanne de purge (73) comporte un clapet anti-retour (63) et/ou la vanne de dérivation supplémentaire comporte un autre clapet anti-retour (63').

4. Unité d'alimentation en air comprimé selon l'une des revendications 1 à 3, dans laquelle la conduite de dérivation (70') permet une section transversale d'écoulement minimale (74') d'un écoulement d'air comprimé traversant supérieure à celle de l'étranglement de régénération (62).

5. Unité d'alimentation en air comprimé selon l'une des revendications 1 à 4, dans laquelle la conduite de purge (70) permet une section transversale d'écoulement minimale (74) d'un écoulement d'air comprimé traversant supérieure à celle de la section transversale de la conduite de dérivation (74').

6. Unité d'alimentation en air comprimé selon l'une des revendications précédentes, comprenant en outre un compresseur à deux étages (51) qui est relié à la fois à l'alimentation en air (0) et à la conduite pneumatique principale (60) et qui est conçu pour remplir, dans un mode de fonctionnement de remplissage correspondant (312) de l'unité d'alimentation en air comprimé (10), l'unité pneumatique (90) avec de l'air comprimé.

7. Unité d'alimentation en air comprimé selon l'une des revendications précédentes, dans laquelle la conduite pneumatique principale (60) comprend en outre un clapet anti-retour.

8. Unité d'alimentation en air comprimé selon l'une des revendications précédentes, qui est conçue pour fournir un deuxième mode de fonctionnement de purge (332) dans lequel la vanne de purge (73) et la vanne de dérivation (73') sont ouvertes simultanément de sorte que l'unité pneumatique (90) puisse être purgée, pendant toute la durée d'un processus de purge, par le biais de la conduite de purge (70) par un flux d'air qui est limité partiellement non pas par l'étranglement de régénération (62) mais par une section transversale d'écoulement minimale (74') de la conduite de dérivation (70').

9. Unité d'alimentation en air comprimé selon la revendication 8, dans laquelle le deuxième et/ou un autre mode de fonctionnement de purge (332, 333) est prévu de telle sorte que la première vanne de purge (73) soit ouverte à un instant t1 et que la vanne de dérivation (73') soit ouverte à un instant t2 et que l'instant t1 soit antérieur à l'instant t2.

10. Unité d'alimentation en air comprimé selon la revendication 8, dans laquelle le deuxième et/ou un autre mode de fonctionnement de purge (332, 333) est prévu de telle sorte que la première vanne de purge (73) soit fermée à un instant t3 et que la vanne de dérivation (73') soit fermée à un instant t4 et que l'instant t3 soit postérieur à l'instant t4.

11. Système pneumatique (100) pourvu de l'unité d'alimentation en air comprimé selon l'une des revendications 1 à 9, et d'une unité pneumatique (90) qui est conçue sous la forme d'une unité de suspension pneumatique qui comporte une rampe (95) et au moins une conduite dérivée (98) raccordée pneumatiquement à la rampe et pourvue d'un soufflet (91) et/ou une deuxième conduite dérivée (99) raccordée pneumatiquement à la rampe (95) et pourvue d'un réservoir d'air comprimé (92) et d'une première vanne directionnelle (93) disposée en amont du soufflet (91) et/ou d'une deuxième vanne directionnelle (94) disposée en amont du réservoir d'air comprimé (92).

12. Procédé de fonctionnement d'une unité d'alimentation en air comprimé (10) selon l'une des revendications 1 à 9 et d'une unité pneumatique (90), notamment d'une unité de suspension pneumatique d'un véhicule, ledit procédé comprenant les étapes suivantes :
- remplir l'unité pneumatique (90) au moyen d'un écoulement d'air comprimé guidé par une conduite pneumatique principale (60) et par un sécheur d'air (61) et provenant de l'unité d'alimentation en air comprimé (10) par le biais d'une vanne de conduite principale (63), disposée dans la conduite pneumatique principale, et/ou d'une vanne de dérivation (73') ;
- maintenir la pression dans l'unité pneumatique (90), la conduite pneumatique principale (60) étant bloquée pour empêcher un écoulement d'air comprimé en provenance de l'unité pneumatique (90) pourvue de la vanne de purge (73) et de la vanne de dérivation (73'), et
- purger l'unité pneumatique (90) au moyen de l'écoulement d'air comprimé guidé par la conduite pneumatique principale (60) et le sécheur d'air (61) et provenant de l'unité pneumatique, à l'aide d'une vanne de purge (73) reliée à un étranglement de purge (72) ou par le biais de la vanne de purge (73) et d'une vanne de dérivation (73') et
le remplissage étant effectué en même temps, dans un premier mode de fonctionnement de remplissage (311), par le biais d'une vanne de conduite principale (63) placée dans la conduite pneumatique principale et de la vanne de dérivation (73'), la vanne de dérivation (73') et une vanne de remplissage (94'), permettant de raccorder un réservoir d'air comprimé (92) à la conduite pneumatique principale (90), étant ouvertes en même temps de sorte que l'unité pneumatique (90) soit remplie, pendant la durée prédéterminée d'un processus de remplissage, par le biais de l'étranglement de régénération (62) et de la conduite de dérivation (70') .

13. Procédé selon la revendication 12, dans lequel la purge est effectuée en même temps dans un deuxième mode de fonctionnement de purge (332) par le biais de l'étranglement de régénération (62) et de la vanne de dérivation (73'),
la vanne de purge (73) et la vanne de dérivation (73') étant ouvertes en même temps de sorte que l'unité pneumatique (90) soit purgée par le biais de l'étranglement de purge (72) et de la conduite de dérivation (70') pendant toute la durée d'un processus de purge.

14. Procédé selon l'une des revendications 12 ou 13, dans lequel une humidité de l'air à l'intérieur de l'unité pneumatique (90) est réduite par purge et remplissage répétés de l'unité pneumatique (90) lorsque la vanne de dérivation (73') est fermée.
